# FASCICULE DE BREVET EUROPEEN

(11) **EP 4 538 155 B1**
(45) Date de publication et mention de la délivrance du brevet: **22.04.2026**
(21) Numéro de dépôt: 24205977.2
(22) Date de dépôt: 10.10.2024
(51) Int. Cl.: B62J 17/08, B62J 17/083, B62J 19/00, B62K 7/04, B62K 27/16

(54) **NACELLE DE TRANSPORT EN VÉLO ÉQUIPÉE D'UNE CAPOTE**
FAHRRAD-TRANSPORTGONDEL MIT EINEM VERDECK
BICYCLE TRANSPORT POD PROVIDED WITH A CANOPY

(30) Priorité: 10.10.2023 FR 2310840
(43) Date de publication de la demande: 16.04.2025
(73) Titulaire: Decathlon, 59650 Villeneuve d'Ascq (FR)
(72) Inventeur: DE CHABOT, Tiphaine, 59650 Villeneuve d'Ascq (FR); FRAY HOVSEPIAN, Céline, 59650 Villeneuve d'Ascq (FR); LEFEVRE, Alain, 59650 Villeneuve d'Ascq (FR); SOYEZ, Christophe, 59650 Villeneuve d'Ascq (FR)
(74) Mandataire: Sayettat, Julien Christian

(56) Documents cités:
- ELECTRIC BIKE REPORT: "Bunch Bikes The Original | Electric Cargo Bike Review (2021)", 1 July 2021 (2021-07-01), XP093139329, Retrieved from the Internet <URL:https://www.youtube.com/watch?v=Hps6K4Au350> [retrieved on 20240308]
- BABBOE: "Installing the rain tent on the Babboe Curve", 20 September 2021 (2021-09-20), XP093139486, Retrieved from the Internet <URL:https://www.youtube.com/watch?v=coS1F0uh0h4> [retrieved on 20240311]

## Description

L'invention concerne une nacelle de transport en vélo, ainsi qu'un vélo comprenant un cadre qui présente une plateforme de portage sur laquelle est montée une telle nacelle de transport.

Elle s'applique en particulier aux nacelles intégrées au cadre d'un vélo de type « cargo », notamment en étant montées sur une plateforme de portage formée à l'avant du guidon d'un tel vélo, afin de permettre par exemple le transport de marchandises ou de passagers tels que des enfants en bas âge ou des animaux. De telles nacelles comprennent généralement un fond entouré au moins partiellement par une jupe périphérique, de manière à former un compartiment de chargement pour des passagers et/ou des marchandises.

On connaît également des nacelles qui présentent deux arceaux, s'étendant chacun entre deux côtés opposés du compartiment, notamment deux côtés avant et arrière d'un compartiment de forme sensiblement rectangulaire, en formant au-dessus dudit compartiment une arche sur laquelle une capote peut être montée de façon réversible, notamment en étant disposée entre les deux arceaux, de manière à recouvrir le compartiment, par exemple pour protéger son chargement et/ou ses passagers du soleil et/ou des intempéries.

Le document "Bunch Bikes The Original | Electric Cargo Bike Review (2021)" (URL https://www.youtube.com/watch? v=Hps6K4Au350) montre le préambule de la revendication 1.

Le document EP-4 124 550 décrit un vélo de type « cargo » dont la nacelle comprend :
- deux arceaux latéraux destinés à être assemblés réversiblement en leur partie avant à un bord avant de la nacelle et en leur partie arrière au cadre du vélo, en présentant chacun une structure rétractable en longueur grâce à un système de tubes télescopiques ;
- une capote qui peut être disposée sur les arceaux assemblés au-dessus dudit compartiment pour le recouvrir, et qui, lorsqu'elle n'est pas utilisée, peut être entièrement démontée desdits arceaux, puis rangée dans un compartiment annexe prévu à cet effet sur l'avant de la nacelle.

Avec cet agencement, lorsque l'utilisateur souhaite couvrir le compartiment, il doit d'abord déployer et monter les arceaux, puis extraire la capote de son rangement pour la disposer sur lesdits arceaux. De même, lorsqu'il souhaite découvrir le compartiment, par exemple par temps chaud et/ou ensoleillé, il doit retirer la capote et la ranger dans son compartiment, puis démonter et rétracter les arceaux.

Cette solution ne donne pas entière satisfaction, en ce qu'elle nécessite plusieurs opérations complexes et fastidieuses à mettre en œuvre. En outre, il existe un risque de perte de la capote, notamment lorsqu'elle n'est pas utilisée pendant une longue période.

L'invention vise à perfectionner l'art antérieur en proposant notamment une nacelle de transport qui est équipée d'une capote agencée pour être disposée réversiblement au-dessus de son compartiment de manière simple, rapide et intuitive.

A cet effet, selon un premier aspect, l'invention propose une nacelle de transport en vélo, ladite nacelle comprenant un fond entouré au moins partiellement par une jupe périphérique pour former un compartiment de chargement, ladite nacelle présentant deux arceaux s'étendant chacun entre deux côtés opposés du compartiment en formant une arche au-dessus dudit compartiment, ladite nacelle étant équipée d'une capote pouvant être disposée entre les arceaux dans une configuration de recouvrement du compartiment, la capote présentant deux premiers bords opposés qui sont montés en coulissement sur respectivement un arceau de sorte à permettre le repliement de ladite capote depuis la configuration de recouvrement vers une configuration de rangement dans laquelle au moins une portion du compartiment est découverte, ladite nacelle étant équipée d'une paroi complémentaire fixée à la jupe périphérique en étant disposée latéralement en regard de l'arche d'un arceau en formant un jeu entre eux qui est suffisant pour permettre le coulissement du premier bord correspondant.

Selon un second aspect, l'invention propose un vélo comprenant un cadre qui présente une plateforme de portage sur laquelle est montée une telle nacelle de transport.

D'autres particularités et avantages de l'invention apparaîtront dans la description qui suit, faite en référence aux figures jointes, dans lesquelles :
[Fig.1] représente, en perspective vue de dessus, un vélo équipé d'une nacelle de transport selon un mode de réalisation de l'invention, dans laquelle la capote n'est pas représentée ;
[Fig.2] représente partiellement en vue de côté le vélo de la figure 1, centré sur l'arceau avant et une paroi complémentaire formant pare-brise disposée en regard ;
[Fig.3] représente, en perspective vue de côté, une nacelle de transport selon la figure 1, dans laquelle une capote montée sur les arceaux est partiellement repliée pour découvrir le compartiment ;
[Fig.4] représente partiellement en vue de dessous le montage en coulissement d'un bord de la capote des figures précédentes sur un arceau de la nacelle ;
[Fig.5] représente partiellement, en perspective vue de dessus, la nacelle des figures précédentes dans laquelle la capote en position de rangement est disposée dans une housse agencée à cet effet le long d'un côté du compartiment ;
[Fig.6] représente partiellement, en vue de côté, l'accrochage sur un côté du compartiment de la capote déployée sur les arceaux.

En relation avec ces figures, on décrit ci-dessous une nacelle 1 de transport en vélo.

Dans le mode de réalisation représenté, le vélo comprend un cadre 2 qui présente une plateforme 3 de portage sur laquelle est montée une telle nacelle 1 de transport.

En variante, la nacelle de transport peut former une remorque indépendante, et peut être à cet effet montée sur un châssis pourvue d'au moins une roue, et notamment de deux roues latérales, ladite remorque pouvant être attachée de manière réversible à l'arrière du cadre d'un vélo conventionnel, par exemple au moyen d'un bras monté à l'avant dudit châssis.

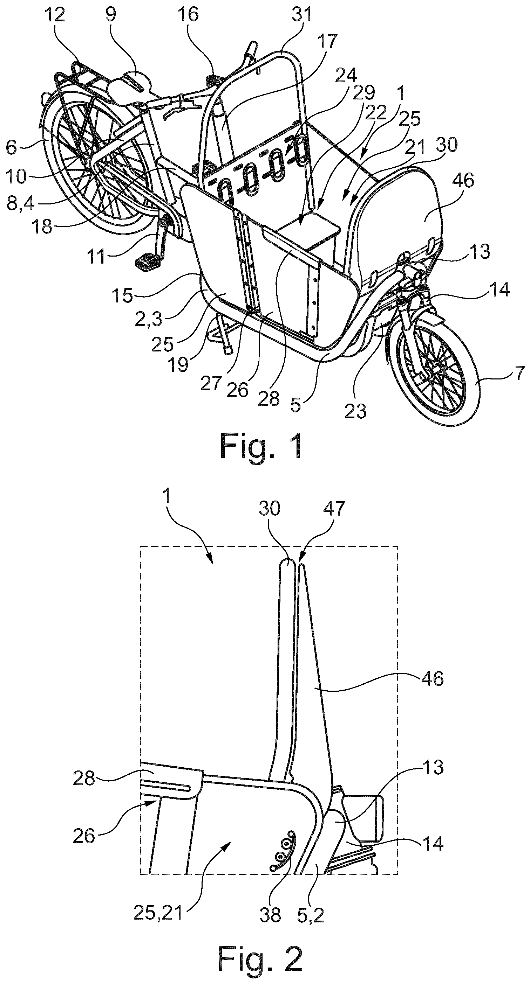

En relation avec la figure 1, le cadre 2 comprend une structure arrière 4 d'assise pour l'utilisateur, ainsi qu'une structure avant 5 sur laquelle est formée la plateforme 3 de portage, chaque structure 4, 5 comprenant au moins une roue 6, 7 pour permettre le déplacement dudit vélo.

La structure arrière 4 comprend un tube de selle 8 dans l'extrémité supérieure duquel est montée une selle 9 d'assise pour l'utilisateur, ladite selle étant de préférence montée de manière coulissante pour permettre audit utilisateur d'en régler la hauteur.

De façon connue, la structure arrière 4 comprend en outre :
- deux haubans arrière 10 qui présentent chacun une structure triangulaire qui s'étend longitudinalement à l'arrière et de part et d'autre du tube de selle 8, une roue arrière 6 étant montée en rotation entre les extrémités arrière libres desdits haubans ;
- un pédalier 11 monté en rotation au niveau de la jonction entre les branches inférieures respectives des haubans 10 et l'extrémité inférieure du tube de selle 8, ledit pédalier étant connecté à la roue arrière 6 au moyen d'une chaine de transmission (non représentée), afin de permettre l'entrainement en rotation de ladite roue arrière par actionnement dudit pédalier, éventuellement en étant assisté par un moteur électrique (non représenté).

Par ailleurs, la structure arrière 4 comprend une plateforme 12 qui s'étend longitudinalement au-dessus de la roue arrière 6, afin de permettre à l'utilisateur de transporter un chargement de petite dimension.

Dans la description, les termes de positionnement dans l'espace sont pris en référence au vélo tel que représenté sur les figures. Ainsi :
- les termes « avant » et « arrière » sont définis par rapport à la direction de déplacement du vélo ;
- le terme « longitudinal » est relatif à une direction parallèle à la dimension maximale du vélo, notamment mesurée dans un plan sagittal qui s'étend entre les extrémités avant et arrière dudit vélo, le terme « transversal » faisant référence à une direction perpendiculaire à ce plan sagittal.

La structure avant 5 comprend un bord avant 13 sur lequel une fourche 14 d'une roue directrice 7 est montée en rotation suivant un premier axe sensiblement vertical, ainsi qu'un bord arrière 15 sur lequel un guidon 16 de direction est monté en rotation suivant un deuxième axe sensiblement vertical, la plateforme de portage 3 s'étendant longitudinalement entre lesdits bords avant et arrière.

Sur la figure 1, le cadre 2 comprend un tube de direction 17 sensiblement vertical qui est formé sur le bord arrière 15 de la structure avant 5, et auquel le tube de selle 8 est relié par l'intermédiaire d'au moins un tube longitudinal 18, le guidon 16 étant monté en rotation dans ledit tube de direction. La structure avant 5 comprend en outre des moyens de liaison mécanique du guidon 16 avec la fourche 14, afin de permettre à l'utilisateur de faire pivoter ladite fourche, et ainsi la roue directrice 7, par rotation dudit guidon.

De façon avantageuse, la structure avant 5 comprend une béquille 19 qui est montée en rotation suivant un axe transversal sous la plateforme de portage 3, entre une position déployée d'utilisation (comme représenté sur la figure 1), dans laquelle ladite béquille vient en appui sur le sol pour maintenir le vélo en position dressée, notamment durant son stationnement, et une position rétractée de rangement, dans laquelle ladite béquille est rabattue sous ladite plateforme pour permettre le déplacement dudit vélo.

La nacelle 1 comprend un fond 20 entouré au moins partiellement par une jupe périphérique 21 pour former un compartiment 22 de chargement, notamment pour permettre le transport de passagers, par exemple des enfants en bas âge, ou de marchandises.

Dans le mode de réalisation représenté, la jupe périphérique 21 comprend une géométrie sensiblement rectangulaire, avec deux panneaux transversaux avant 23 et arrière 24 qui reposent contre les bords respectivement avant 13 et arrière 15 de la structure avant 5, ainsi que deux panneaux latéraux 25 qui s'étendent longitudinalement de part et d'autre de la plateforme de portage 3.

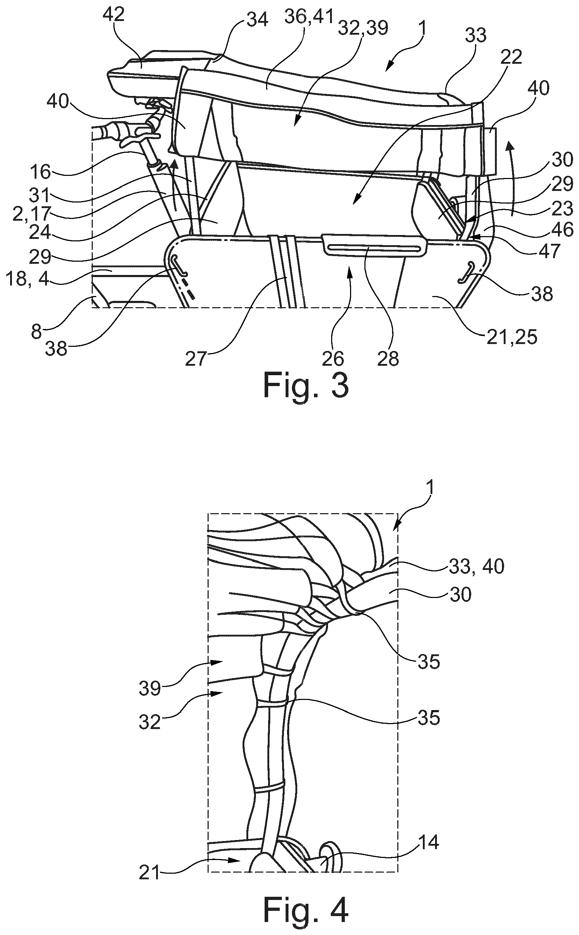

De façon avantageuse, l'un des panneaux latéraux 25 est équipé d'une porte 26 pour faciliter l'accès au compartiment 22 par un passager de petite taille, notamment un enfant en bas âge. En relation avec les figures 1 et 3, la porte 26 est formée dans l'épaisseur du panneau latéral 25 correspondant, auquel elle est reliée en un bord vertical par une charnière 27, ladite porte étant en outre équipée d'une manette supérieure 28 de verrouillage en position de fermeture, que l'utilisateur et/ou le passager peut désactiver en levant ladite manette.

Par ailleurs, comme représenté sur les figures, le compartiment 22 comprend deux bancs 29 avant et arrière qui s'étendent chacun transversalement le long du panneau respectivement avant 23 et arrière 24 de la jupe périphérique 21, afin de permettre à des passagers de s'asseoir dans ledit compartiment.

La nacelle 1 comprend en outre deux arceaux 30, 31 qui s'étendent chacun entre deux côtés opposés du compartiment 22, en formant chacun une arche au-dessus dudit compartiment. Sur les figures, la nacelle 1 comprend deux arceaux avant 30 et arrière 31 qui s'étendent chacun entre les panneaux latéraux 25 et à proximité du panneau respectivement avant 23 et arrière 24 de la jupe périphérique 21.

Pour pouvoir protéger le compartiment 22, et notamment ses passagers, d'une exposition au soleil et/ou aux intempéries, la nacelle 1 est équipée d'une capote 32 qui peut être disposée entre les arceaux 30, 31 dans une configuration de recouvrement dudit compartiment.

Comme représenté sur la figure 3, la capote 32 présente deux premiers bords 33, 34 opposés, respectivement avant et arrière, qui sont montés chacun en coulissement sur l'arceau respectivement avant 30 et arrière 31, de sorte à permettre le repliement de ladite capote depuis la configuration de recouvrement vers une configuration de rangement, dans laquelle au moins une portion du compartiment 22 est découverte.

Cet agencement permet de déployer et de replier la capote 32 des arceaux 30, 31 de manière rapide et intuitive, sans avoir à effectuer d'opérations fastidieuses pour monter/démonter les arceaux 30, 31 et/ou pour monter/enlever la capote 32 desdits arceaux. Ainsi, l'utilisateur peut rapidement couvrir - découvrir - le compartiment 22 lorsqu'il en a besoin, par exemple en cas de survenue - ou d'arrêt - soudain(e) d'une averse.

De façon avantageuse, les bords avant 33 et arrière 34 de la capote 32 comprennent chacun des moyens 35 de coulissement sur l'arceau 30, 31 correspondant, lesdits moyens étant montés autour dudit arceau sans possibilité de démontage manuel. Ainsi, la capote 32 est associée de manière permanente aux arceaux 30, 31, ce qui permet d'éviter sa perte par l'utilisateur lorsqu'elle n'est pas utilisée.

Les moyens de coulissement comprennent chacun au moins un passant 35 qui est monté en coulissement autour de l'arceau 30, 31 correspondant. Comme représenté sur la figure 4, les bords avant 33 et arrière 34 de la capote 32 comprennent chacun une rangée de passants 35 espacés le long dudit bord, chaque passant 35 comprenant une boucle textile qui est associée par couture sur une paroi intérieure de la capote 32.

Sur les figures, la capote 32 présente en outre deux deuxièmes bords 36 opposés - ici latéraux - qui s'étendent longitudinalement de part et d'autre des bords avant 33 et arrière 34. Ces bords latéraux 36 sont disposés en regard de respectivement un côté latéral du compartiment 22 lorsque la capote 32 est en position de recouvrement, et au moins un desdits bords latéraux est disposé à distance du côté latéral correspondant lorsque la capote 32 est en configuration de rangement.

Pour ce faire, au moins l'un des deux bords latéraux 36 est équipé de moyens 37 de fixation réversible sur le côté correspondant du compartiment 22. Ce bord latéral 36 peut notamment présenter deux extrémités avant et arrière de liaison avec le bord respectivement avant 33 et arrière 34 de la capote 32, chacune de ces extrémités étant équipée d'un moyen 37 de fixation réversible sur un moyen complémentaire 38 prévu sur le côté correspondant du compartiment 22, notamment au voisinage de l'arceau 30, 31 adjacent.

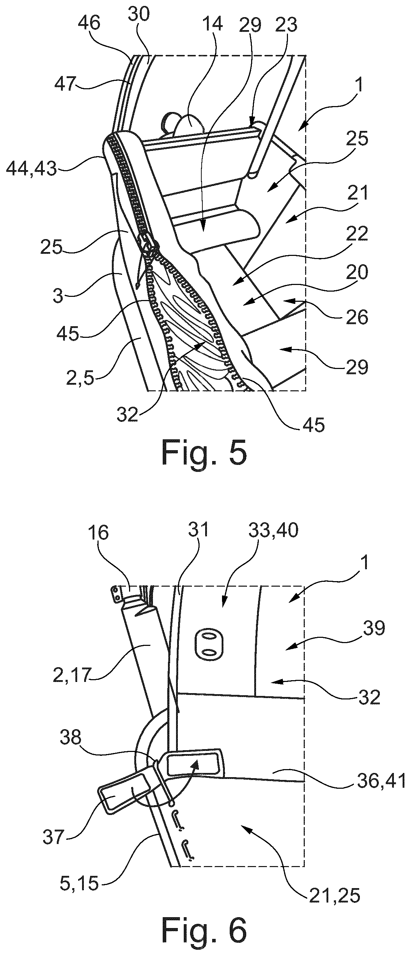

En relation avec la figure 6, ces moyens de liaison comprennent chacun une bande auto-agrippante 37 associée à respectivement une extrémité du bord latéral 36, et les moyens complémentaires comprennent chacun une boucle 38 de fixation de ladite bande qui est associée sur une face extérieure du panneau latéral 25 correspondant.

De façon avantageuse, chacun des bords latéraux 36 est équipé de tels moyens 37 pour permettre la fixation réversible de leurs extrémités sur un moyen complémentaire 38 formé sur le panneau latéral 25 correspondant, de sorte à maintenir la configuration de recouvrement d'un côté à l'autre.

En particulier, cet agencement permet de désolidariser chaque bord latéral 36 de la nacelle 1, et de libérer chaque espace latéral s'étendant de part et d'autre des arceaux 30, 31, en retroussant la capote 32 en partie supérieure desdits arceaux. Ainsi, dans cette configuration, la capote 32 peut fournir une protection du compartiment 22 et de ses passagers contre les rayons du soleil et/ou les intempéries, tout en laissant circuler de l'air dans le compartiment 22, afin d'éviter une hausse de la température dans ledit compartiment en cas de fortes chaleurs.

De façon avantageuse, la dimension de la capote 32 entre ses bords avant 33 et arrière 34 est définie par rapport à l'écartement longitudinal des arceaux 30, 31, de sorte à tendre ladite capote entre lesdits arceaux en configuration de recouvrement. De même, la dimension de la capote 32 entre ses bords latéraux 36 est définie par rapport à la longueur des arceaux 30, 31 entre les côtés latéraux du compartiment 22, de sorte à tendre ladite capote entre lesdits côtés latéraux en configuration de recouvrement.

Ainsi, on évite que la capote 32 en configuration de recouvrement ne pende des arceaux 30, 31 sous l'effet de la gravité, ce qui pourrait gêner les passagers occupant le compartiment 22.

La capote 32 peut comprendre au moins un panneau 39 en matériau transparent, qui s'étend notamment entre ses bords avant 33 et arrière 34, mais également entre ses bords latéraux 36, afin de permettre aux passagers occupant le compartiment 22 de voir au travers dudit panneau lorsque la capote 32 est en configuration de recouvrement dudit compartiment, mais également de permettre à la lumière ambiante de pénétrer par ledit panneau dans ledit compartiment. Pour des raisons de robustesse de l'assemblage, le panneau transparent 39 peut être soudé sur un contour textile, lui-même cousu sur les bords 33, 34, 36 de la capote 32.

Les premiers 33, 34 et/ou les deuxièmes 36 bords de la capote 32 peuvent également être équipés d'une paroi textile 40, 41 de recouvrement des arceaux 30, 31 et/ou des côtés du compartiment 22 correspondants lorsque ladite capote est en configuration de recouvrement, afin de dissimuler lesdits arceaux et/ou lesdits côtés, et ainsi d'améliorer l'esthétique de la nacelle 1 dans ladite configuration de recouvrement.

En particulier, les bords avant 33 et arrière 34 comprennent chacun une telle paroi textile 40 sous laquelle sont cousus les passants 35 de coulissement dudit bord sur l'arceau 30, 31 correspondant.

Dans le mode de réalisation représenté, au moins une portion d'un premier bord 33, 34 de la capote 32, notamment du bord arrière 34, est équipée d'un volet 42, notamment en matériau textile imperméable, qui est déployable au-delà de l'arceau 31, afin de recouvrir le guidon 16, et plus particulièrement les mains de l'utilisateur, et ainsi les protéger contre les intempéries lorsque la capote 32 est en configuration de recouvrement du compartiment 22.

En relation avec la figure 5, la capote 32 comprend en outre une housse 43 pour la réception de ladite capote en configuration de rangement.

Pour ce faire, l'un des bords latéraux 36 de la capote 32 est équipé d'une paroi 44, notamment en matériau textile, dans laquelle la capote 32 peut être repliée, ladite paroi étant enroulable autour de ladite capote repliée et comprenant des moyens 45 de fermeture pour former la housse 43 de réception.

En particulier, la paroi 44 comprend un premier bord longitudinal qui est solidarisé de manière permanente, notamment par couture, à un bord latéral 36 de la capote 32, ainsi qu'un second bord longitudinal libre qui est équipé de moyens 45 de fixation réversible sur des moyens complémentaires 45 formés au niveau dudit bord latéral, afin de permettre la fermeture de la housse 43 par coopération entre lesdits moyens de fixation et complémentaire.

Dans le mode de réalisation représenté, les moyens de fixation et complémentaires sont formés par une bande 45 de fermeture à glissière de type fermeture éclair.

En relation avec les figures 1 à 3, la nacelle 1 est équipée d'une paroi complémentaire 46, notamment transparente et rigide pour former pare-brise, ladite paroi étant fixée au panneau avant 23 de la jupe périphérique 21 en étant disposée latéralement en regard de l'arche de l'arceau avant 30.

En particulier, dans le mode de réalisation représenté, la paroi de pare-brise 46 s'étend transversalement en partie supérieure du panneau avant 23, et est disposée en regard longitudinal de la face latérale avant de l'arceau avant 30.

De façon avantageuse, la paroi de pare-brise 46 est disposée en regard de l'arceau avant 30 de manière à former entre eux un jeu 47 dont la dimension longitudinale est suffisante pour permettre le coulissement dans ledit jeu du bord avant 33 de la capote 32.

La nacelle 1 peut également être équipée d'une paroi complémentaire, notamment d'occultation, ladite paroi comprenant des moyens d'association réversible sur un arceau, notamment l'arceau arrière 31, dans une configuration où elle est disposée latéralement en regard de l'arche dudit arceau.

En particulier, cette paroi d'occultation peut être disposée réversiblement en regard longitudinal de la face latérale arrière de l'arceau arrière 31, et peut comprendre au moins une portion centrale formée d'un matériau transparent, afin de permettre la vision au travers d'elle de l'utilisateur du vélo et/ou des passagers occupant le compartiment 22.

De façon avantageuse, les moyens d'association réversible de cette paroi d'occultation comprennent des aimants qui sont disposés dans au moins une partie du bord périphérique de ladite paroi, et notamment dans un ourlet formé dans ledit bord, afin de permettre la fixation de ladite paroi par aimantation sur l'arceau arrière 31 en matériau métallique.

Par ailleurs, la nacelle 1 peut comprendre une housse de rangement dans laquelle cette paroi complémentaire d'occultation peut être pliée lorsqu'elle n'est pas utilisée.

La capote 32 et/ou une éventuelle paroi complémentaire 40, 41, 42, 44 peuvent comprendre au moins une portion présentant des propriétés photo-réfléchissantes, afin d'améliorer la visibilité de la nacelle 1 en cas de faible luminosité ambiante, et ainsi d'améliorer la sécurité de l'utilisateur du vélo et/ou des passagers occupant le compartiment 22.

De façon avantageuse, les parois textiles 40, 41 des bords avant 33, arrière 34 et latéraux 36 de la capote 32, ainsi que le volet arrière 42, la paroi 44 formant la housse 43 et le bord périphérique de la paroi arrière d'occultation présentent de telles propriétés photo-réfléchissantes.

Lorsqu'il souhaite déployer la capote 32 en configuration de recouvrement, l'utilisateur ouvre la housse 43, fixe les bandes auto-agrippantes 36 du bord latéral 36 portant ladite housse sur les boucles 38 correspondantes formées sur le panneau latéral 25 adjacent de la nacelle 1, puis fait coulisser les bords avant 33 et arrière 34 de la capote 32 sur leurs arceaux 30, 31 respectifs, jusqu'à ce que le bord latéral 36 opposé vienne en regard du panneau latéral 25 opposé de la nacelle 1.

Ensuite, l'utilisateur tend la capote 32 sur les arceaux 30, 31 en fixant les bandes auto-agrippantes 37 de l'autre bord latéral 36 sur leurs boucles 38 respectives formées sur l'autre panneau latéral 25 de la nacelle 1, puis déploie les parois textiles 40 des bords avant 33 et arrière 34 pour recouvrir chacun des arceaux 30, 31, ainsi que le volet arrière 42 pour recouvrir le guidon 16.

De même, lorsqu'il souhaite ranger la capote 32, l'utilisateur détache les bandes auto-agrippantes 37 de chaque bord latéral 36, puis replie les parois 40 de recouvrement des arceaux 30, 31 et le volet arrière 42 sur le panneau central transparent 39 de la capote 32, puis fait coulisser ses bords avant 33 et arrière 34 sur leurs arceaux 30, 31 respectifs, comme représenté sur la figure 3, jusqu'à amener les deux bords latéraux 36 de la capote 32 vers la paroi 44 formant la housse 43.

Enfin, l'utilisateur enroule la paroi 44 autour de la capote 32 ainsi retroussée, puis ferme la housse 43 au moyen de la bande 45 de fermeture à glissière, comme représenté sur la figure 5.

## Revendications

1. Nacelle (1) de transport en vélo, ladite nacelle comprenant un fond (20) entouré au moins partiellement par une jupe périphérique (21) pour former un compartiment (22) de chargement, ladite nacelle présentant deux arceaux (30, 31) s'étendant chacun entre deux côtés opposés (25) du compartiment (22) en formant une arche au-dessus dudit compartiment, ladite nacelle étant équipée d'une capote (32) pouvant être disposée entre les arceaux (30, 31) dans une configuration de recouvrement du compartiment (22), la capote (32) présentant deux premiers bords (33, 34) opposés qui sont montés en coulissement sur respectivement un desdits arceaux (30, 31) de sorte à permettre le repliement de ladite capote depuis la configuration de recouvrement vers une configuration de rangement dans laquelle au moins une portion du compartiment (22) est découverte, ladite nacelle étant **caractérisée en ce qu'**elle est équipée d'une paroi complémentaire (46) fixée à la jupe périphérique (21) en étant disposée latéralement en regard de l'arche d'un desdits arceaux (30) en formant un jeu (47) entre eux qui est suffisant pour permettre le coulissement du premier bord (33) correspondant.

2. Nacelle (1) de transport selon la revendication 1, **caractérisée en ce que** la capote (32) présente deux deuxièmes bords (36) opposés qui s'étendent de part et d'autre des premiers bords (33, 34), lesdits deuxièmes bords étant disposés en regard de respectivement un desdits côtés (25) du compartiment (22) lorsque la capote (32) est en configuration de recouvrement, au moins un desdits deuxièmes bords étant disposé à distance du côté (25) correspondant lorsque la capote (32) est en configuration de rangement.

3. Nacelle (1) de transport selon la revendication 2, **caractérisée en ce qu'**au moins l'un des deuxièmes bords (36) est équipé de moyens (37) de fixation réversible sur le côté (25) correspondant du compartiment (22).

4. Nacelle (1) de transport selon la revendication 3, **caractérisée en ce que** chacun des deuxièmes bords (36) est équipé d'un moyen (37) de fixation réversible sur le côté (25) correspondant de sorte à maintenir la configuration de recouvrement d'un côté à l'autre.

5. Nacelle (1) de transport selon l'une quelconque des revendications 1 à 4, **caractérisée en ce que** les premiers bords (33, 34) de la capote (32) comprennent chacun des moyens (35) de coulissement sur l'arceau (30, 31) correspondant, lesdits moyens étant montés autour dudit arceau sans possibilité de démontage manuel.

6. Nacelle (1) de transport selon la revendication 5, **caractérisée en ce que** les moyens de coulissement comprennent au moins un passant (35) qui est monté en coulissement autour de l'arceau (30, 31) correspondant.

7. Nacelle (1) de transport selon l'une quelconque des revendications 1 à 6, **caractérisée en ce que** la dimension de la capote (32) entre ses premiers bords (33, 34) est définie par rapport à l'écartement des arceaux (30, 31) de sorte à tendre ladite capote entre lesdits arceaux en configuration de recouvrement.

8. Nacelle (1) de transport selon l'une quelconque des revendications 2 et 3 à 7, si elles sont dépendantes de la revendication 2, **caractérisée en ce que** la dimension de la capote (32) entre ses deuxièmes bords (36) est définie par rapport à la longueur des arceaux (30, 31) entre les côtés (25) du compartiment (22) de sorte à tendre ladite capote entre lesdits côtés en configuration de recouvrement.

9. Nacelle (1) de transport selon l'une quelconque des revendications 1 à 8, **caractérisée en ce que** les premiers (33, 34) et/ou deuxièmes (36) bords de la capote (32) sont équipés d'une paroi textile (40, 41) de recouvrement des arceaux (30, 31) et/ou des côtés (25) correspondants.

10. Nacelle (1) de transport selon l'une quelconque des revendications 1 à 9, **caractérisée en ce qu'**elle comprend une housse (43) de réception de la capote (32) en configuration de rangement.

11. Nacelle (1) de transport selon l'une quelconque des revendications 1 à 10, **caractérisée en ce qu'**elle est équipée d'une paroi complémentaire comprenant des moyens d'association réversible sur un desdits arceaux (31) dans une configuration où elle est disposée latéralement en regard de l'arche dudit arceau.

12. Vélo comprenant un cadre (2) qui présente une plateforme (3) de portage sur laquelle est montée une nacelle (1) de transport selon l'une quelconque des revendications 1 à 11.

13. Vélo selon la revendication 12, **caractérisé en ce que** le cadre (2) comprend une structure arrière (4) d'assise pour l'utilisateur et une structure avant (5) sur laquelle est formée la plateforme (3) de portage, chaque structure (4, 5) comprenant au moins une roue (6, 7) pour permettre le déplacement dudit vélo.

## Patentansprüche

1. Transportgondel (1) an Fahrrad, die Gondel umfassend einen Boden (20), der zumindest teilweise von einer Umfangsschürze (21) umgeben ist, um ein Fach (22) für Zuladung zu bilden, wobei die Gondel zwei Bügel (30, 31) aufweist, die sich jeweils zwischen zwei gegenüberliegenden Seiten (25) des Fachs (22) erstrecken und dabei einen Bogen über dem Fach bilden, wobei die Gondel mit einem Verdeck (32) ausgestattet ist, das in einer Abdeckkonfiguration zwischen den Bügeln (30, 31) des Fachs (22) angeordnet werden kann, das Verdeck (32) zwei gegenüberliegende erste Ränder (33, 34) aufweist, die gleitend an jeweils einem der Bügel (30, 31) montiert sind, um das Zusammenfalten des Verdecks von der Abdeckkonfiguration in eine Verstaukonfiguration zu ermöglichen, in der zumindest ein Abschnitt des Fachs (22) freigelegt ist, wobei die Gondel **dadurch gekennzeichnet ist, dass** sie mit einer komplementären Wand (46) ausgestattet ist, die an der Umfangsschürze (21) befestigt ist, indem sie seitlich gegenüber dem Bogen eines der Bügel (30) angeordnet ist, indem sie ein Spiel (47) zwischen ihnen bildet, das ausreichend ist, um das Gleiten des entsprechenden ersten Rands (33) zu ermöglichen.

2. Transportgondel (1) nach Anspruch 1, **dadurch gekennzeichnet, dass** das Verdeck (32) zwei gegenüberliegende zweite Ränder (36) aufweist, die sich auf beiden Seiten der ersten Ränder (33, 34) erstrecken, wobei die zweiten Ränder gegenüber jeweils einer der Seiten (25) des Fachs (22) angeordnet sind, wenn das Verdeck (32) in der Abdeckkonfiguration ist, mindestens einer der zweiten Ränder in einem Abstand von der entsprechenden Seite (25) angeordnet ist, wenn das Verdeck (32) in der Verstaukonfiguration ist.

3. Transportgondel (1) nach Anspruch 2, **dadurch gekennzeichnet, dass** mindestens einer der zweiten Ränder (36) mit Einrichtungen (37) zur reversiblen Befestigung an der entsprechenden Seite (25) des Fachs (22) ausgestattet ist.

4. Transportgondel (1) nach Anspruch 3, **dadurch gekennzeichnet, dass** jeder der zweiten Ränder (36) mit einer Einrichtung (37) zur reversiblen Befestigung an der entsprechenden Seite (25) ausgestattet ist, um die Abdeckkonfiguration von einer Seite zur anderen beizubehalten.

5. Transportgondel (1) nach einem der Ansprüche 1 bis 4, **dadurch gekennzeichnet, dass** die ersten Ränder (33, 34) des Verdecks (32) jeweils Einrichtungen (35) zum Gleiten auf dem entsprechenden Bügel (30, 31) umfassen, wobei die Einrichtungen ohne Möglichkeit einer manuellen Demontage um den Bügel montiert sind.

6. Transportgondel (1) nach Anspruch 5, **dadurch gekennzeichnet, dass** die Gleiteinrichtungen mindestens eine Schlaufe (35) umfassen, die gleitend um den entsprechenden Bügel (30, 31) montiert ist.

7. Transportgondel (1) nach einem der Ansprüche 1 bis 6, **dadurch gekennzeichnet, dass** die Abmessung des Verdecks (32) zwischen seinen ersten Rändern (33, 34) in Bezug auf den Abstand der Bügel (30, 31) definiert ist, um das Verdeck in Abdeckkonfiguration zwischen den Bügeln zu spannen.

8. Transportgondel (1) nach einem der Ansprüche 2 und 3 bis 7, wenn diese von Anspruch 2 abhängig sind,
**dadurch gekennzeichnet, dass** die Abmessung des Verdecks (32) zwischen seinen zweiten Rändern (36) in Bezug auf die Länge der Bügel (30, 31) zwischen den Seiten (25) des Fachs (22) definiert ist, um das Verdeck in Abdeckkonfiguration zwischen den Seiten zu spannen.

9. Transportgondel (1) nach einem der Ansprüche 1 bis 8, **dadurch gekennzeichnet, dass** die ersten (33, 34) und/oder zweiten (36) Ränder des Verdecks (32) mit einer Textilwand (40, 41) zum Abdecken der entsprechenden Bügel (30, 31) und/oder Seiten (25) ausgestattet sind.

10. Transportgondel (1) nach einem der Ansprüche 1 bis 9, **dadurch gekennzeichnet, dass** es eine Hülle (43) zum Aufnehmen des Verdecks (32) in Verstaukonfiguration umfasst.

11. Transportgondel (1) nach einem der Ansprüche 1 bis 10, **dadurch gekennzeichnet, dass** sie mit einer komplementären Wand ausgestattet ist, umfassend Einrichtungen zur reversiblen Assoziation auf einem der Bügel (31) in einer Konfiguration umfasst, in der sie seitlich gegenüber dem Bogen des Bügels angeordnet ist.

12. Fahrrad, umfassend einen Rahmen (2), der eine Tragplattform (3) aufweist, auf der eine Transportgondel (1) nach einem der Ansprüche 1 bis 11 montiert ist.

13. Fahrrad nach Anspruch 12, **dadurch gekennzeichnet, dass** der Rahmen (2) eine hintere Struktur (4) zum Sitzen für den Benutzer und eine vordere Struktur (5), auf der die Tragplattform (3) gebildet ist, umfasst, jede Struktur (4, 5) umfassend mindestens ein Rad (6, 7) umfasst, um die Fortbewegung des Fahrrads zu ermöglichen.

## Claims

1. Bicycle transport cradle (1), said cradle comprising a bottom (20) at least partially surrounded by a peripheral skirt (21) to form a loading compartment (22), said cradle having two hoops (30, 31) each extending between two opposite sides (25) of the compartment (22) to form an arch above said compartment, said cradle being equipped with a hood (32) that can be placed between the hoops (30, 31) in a configuration covering the compartment (22), the hood (32) having two first opposite edges (33, 34) which are mounted so as to slide on respectively one of said hoops (30, 31) so as to allow said hood to be folded from the covering configuration to a storage configuration in which at least a portion of the compartment (22) is uncovered, said cradle being **characterised in that** it is equipped with an additional wall (46) fixed to the peripheral skirt (21) and arranged laterally opposite the arch of one of said hoops (30), forming a gap (47) between them which is sufficient to allow the corresponding first edge (33) to slide.

2. Bicycle transport cradle (1) according to claim 1, **characterised in that** the hood (32) has two opposite second edges (36) which extend on either side of the first edges (33, 34), said second edges being disposed opposite respectively one of said sides (25) of the compartment (22) when the hood (32) is in the covering configuration, at least one of said second edges being disposed at a distance from the corresponding side (25) when the hood (32) is in the storage configuration.

3. Bicycle transport cradle (1) according to claim 2, **characterised in that** at least one of the second edges (36) is equipped with means (37) for reversible attachment to the corresponding side (25) of the compartment (22).

4. Bicycle transport cradle (1) according to claim 3, **characterised in that** each of the second edges (36) is equipped with a means (37) for reversible fixation to the corresponding side (25) so as to maintain the covering configuration from one side to the other.

5. Bicycle transport cradle (1) according to any of claims 1 to 4, **characterised in that** the first edges (33, 34) of the hood (32) each comprise means (35) for sliding on the corresponding hoop (30, 31), said means being mounted around said hoop without the possibility of manual removal.

6. Bicycle transport cradle (1) according to claim 5, **characterised in that** the sliding means comprise at least one loop (35) which is mounted so as to slide around the corresponding hoop (30, 31).

7. Bicycle transport cradle (1) according to any of claims 1 to 6, **characterised in that** the dimension of the hood (32) between its first edges (33, 34) is defined in relation to the spacing of the hoops (30, 31) so as to stretch said hood between said hoops in the covering configuration.

8. Bicycle transport cradle (1) according to any of claims 2 and 3 to 7, if they are dependent on claim 2, **characterised in that** the dimension of the hood (32) between its second edges (36) is defined in relation to the length of the hoops (30, 31) between the sides (25) of the compartment (22) so as to stretch said hood between said sides in the covering configuration.

9. Bicycle transport cradle (1) according to any of claims 1 to 8, **characterised in that** the first (33, 34) and/or second (36) edges of the hood (32) are equipped with a textile wall (40, 41) for covering the corresponding hoops (30, 31) and/or the corresponding sides (25).

10. Bicycle transport cradle (1) according to any of claims 1 to 9, **characterised in that** it comprises a cover (43) for receiving the hood (32) in the storage configuration.

11. Bicycle transport cradle (1) according to any of claims 1 to 10, **characterised in that** it is equipped with an additional wall comprising means for reversible attachment to one of said hoops (31) in a configuration where it is arranged laterally opposite the arch of said hoop.

12. Bicycle comprising a frame (2) which has a carrying platform (3) on which is mounted a bicycle transport cradle (1) according to any one of claims 1 to 11.

13. Bicycle according to claim 12, **characterised in that** the frame (2) comprises a rear structure (4) for the user to sit on and a front structure (5) on which the carrying platform (3) is formed, each structure (4, 5) comprising at least one wheel (6, 7) to enable the bicycle to be moved.
